# EUROPEAN PATENT SPECIFICATION

(11) **EP 2 109 840 B1**
(45) Date of publication and mention of the grant of the patent: **01.11.2017**
(21) Application number: 07869168.0
(22) Date of filing: 12.12.2007
(51) Int. Cl.: G06F 21/10

(54) **METHOD AND APPARATUS FOR CREATING LICENSES IN A MOBILE DIGITAL RIGHTS MANAGEMENT NETWORK**
VERFAHREN UND VORRICHTUNG ZUR ERSTELLUNG VON LIZENZEN IN EINEM NETZWERK ZUR VERWALTUNG DIGITALER RECHTE
PROCÉDÉ ET APPAREIL DE CRÉATION DE LICENCE DANS UN RÉSEAU DE GESTION DE DROITS NUMÉRIQUES MOBILES

(30) Priority: 12.12.2006 US 609770
(43) Date of publication of application: 21.10.2009
(60) Divisional application: 11189413.5
(73) Proprietor: QUALCOMM Incorporated, San Diego, CA 92121 (US)
(72) Inventor: McLEAN, Ivan Hugh, San Diego, CA 92121-1714 (US)
(74) Representative: Dunlop, Hugh Christopher
(86) International application number: PCT/US2007/087271
(87) International publication number: WO 2008/073981

(56) References cited:
- EP-A2- 0 809 221
- EP-A2- 1 571 524
- WO-A-00/59152
- US-A1- 2003 130 953
- US-A1- 2005 251 489
- US-A1- 2006 075 505
- US-A1- 2006 242 081

## Description

### FIELD

The described aspects relate generally to wireless communication devices and network communication. More particularly, the described aspects relate to creating media content licenses in a mobile Digital Rights Management Network.

### BACKGROUND

Digital Rights Management (DRM) is a systematic approach to copyright protection for digital media. The purpose of DRM is to prevent illegal distribution of content over networks, such as the Internet. DRM systems were developed in response to the rapid increase in online piracy of commercially marketed material, which proliferated through the widespread use of peer-to-peer file exchange programs. Although copyright laws protect online content, policing the Web and catching law-breakers is very difficult. DRM technology focuses on making it difficult to steal content in the first place, thereby providing a much surer approach to the problem than the hit-and-miss strategies aimed at apprehending online poachers after-the-fact.

In a wireless or mobile network environment, the ability to protect digital rights becomes even more problematic as the ease by which attackers can intercept wireless transmissions increases. Thus, it is generally accepted that in a mobile DRM network, digitally authenticated DRM licenses, otherwise referred to as digitally signed DRM licenses, offer greater security against unauthorized modification than licenses that are not digitally authenticated.

DRM schemes that do not use digitally authenticated licenses are forced to protect the license against modification using methods that have been found to be unacceptable in terms of the security that they offer. For example, "secure" storage methods, systems that rely on the hiding of keys on the client device or software obfuscation, are all less desirable for various reasons. First, these suspect security methods do not offer "provable" security. In other words, it may be difficult to provide a measure to quantify the level of security provided by these methods. In contrast, the time required (i.e., work factor) to break a commonly used public key algorithm, for example a 1024 or 2048 bit RSA algorithm, is assumed to be well understood by those having knowledge in the art of cryptography. Secondly, successful attacks against such schemes tend to propagate well. Once an attacker figures out how client based keys are generated, or how they are stored, or the gist of the obfuscated software, then this information can be leveraged into a widespread attack, in which a utility is written, downloaded or distributed for use by the novice attacker.

In addition to security concerns, "secure" storage methods, key hiding methods and software obfuscation do not tend to work well on heterogeneous networks. In such networks, some original equipment manufacturers (OEMs) may have implemented very strong, hardware-based secure storage while other OEMs may have implemented weaker software-based secured storage and still others may not have implemented any storage security whatsoever. Such networking environments are very common, and result in a security situation that is extremely difficult to monitor and manage.

DRM schemes that use digitally authenticated licenses limit the attacker, who desires to perform an unauthorized modification of the rights contained in the license, to modifying the implementation itself. In a mobile or wireless network environment, modifying the implementation would generally entail reflashing the handset (i.e., re-programming the flash part), which is an attack that does not propagate well.

Thus, for the security reasons described above, the current trend within DRM schemes is reliance on digitally authenticated licenses. All of these current schemes rely on having the license generated and authenticated concurrently or in immediate succession by a relevant server, such as a licensing server or a content server. Therefore, a need exists to create an alternative method for implementing DRM in a mobile or wireless network environment. For example, a need exists to generate a DRM scheme that relies on authentication mechanisms, such as digital signatures or the like, but provides the ability to generate the licensing rights and a corresponding license authentication mechanism independent of each other. Thus, the desired DRM scheme will provide additional security, in that independent creation of the licensing rights and license authentication mechanism may further thwart the efforts of would be attackers or license manipulators.

EP1571524A2 describes a method for accessing a digital content consisting in:a client device receiving a right managed content inlcuding a SRL and an encrypted digital content; the client device transmitting the SRL to a RM server; the RM server obtaining a symmetric key CK and rights data from the SRL; the RM server transmitting the symmetric key CK and the rights data to the client device; the client device decrypting the encrypted digital content file using the symmetric key CK to form the digital content file; and the client device accessing the digital content according to the received rights data.

### SUMMARY

Thus, devices, methods, apparatus, computer-readable media and processors are presented that provide for the creation of digitally authenticated licenses in a wireless digital rights management network. The aspects provide for the licensing rights to be generated at the wireless device in accordance with available licensing parameters associated with selected media content. The digital authentication mechanism is generated at a network device and communicated to the wireless device, either separately as an authentication mechanism or as part of an assembled digital media license. In some aspects, the wireless device will assemble the licensing rights and the authentication mechanism to create the digital media license. Thus, the present aspects provide for a highly secure means of protecting media content rights, insuring that media content rights are securely formed and, once formed, the authenticated license insures that rights are not susceptible to tampering or alteration by the licensee or another would be attacker.

In one aspect, a method for generating a media content license in a wireless network is provided. The method includes generating one or more proposed licensing rights related to selected media content, communicating the proposed licensing rights to a network device and receiving licensing rights validation, such as an authentication mechanism, thereby defining authenticated licensing rights. In some alternate aspects, the method may also include the step of assembling, at the wireless device, the licensing rights and the authentication mechanism to create a media content license. An alternate aspect is defined by a machine-readable medium that includes instructions, which, when executed by a machine, cause the machine to perform operations. The operations include generating, at a wireless device, one or more proposed licensing rights related to selected media content, communicating the proposed licensing rights to a network device and receiving, at the wireless device, licensing rights approval, such as an authentication mechanism, thereby defining authenticated licensing rights. In some aspects, the operations may additionally include assembling, at the wireless communication device, the licensing rights and the authentication mechanism to create a media content license.

Yet another aspect is defined by a processor device, implemented in a wireless device that is configured to perform the operations of generating one or more proposed licensing rights related to selected media content, communicating the proposed licensing rights to a network device and receiving licensing rights approval, such as an license authentication mechanism, thereby defining authenticated licensing rights. In some aspects, the processor may be additionally configured to perform the operation of assembling the licensing rights and the authentication mechanism to create a media content license.

In an alternate aspect, a wireless communication device is provided that includes a computer platform including a processing engine and a memory unit and a licensing rights module stored in the memory unit and executed by the processing engine. The licensing module is operable to present licensing options for selected media content, generate proposed licensing rights based on selected licensing options and communicate the proposed licensing rights to a network device for validation. In certain aspects licensing options are generated from an association between a licensing code associated with selected media content and available licensing parameters, such as usage terms, pricing information, device characteristics and the like.

In a related aspect, a wireless device is defined that includes a means for processing data on the wireless device, a means for storing data on the wireless device that is in communication with the means for processing data, a means for presenting licensing options for selected media content, a means for generating proposed licensing rights based on selected licensing options and a means for communicating the proposed licensing rights to a network device for validation.

An aspect is also defined by a system for creating digitally authenticated licenses in a wireless network. The system includes a wireless communication device that includes a computer platform that includes a processing engine, a memory unit and a licensing rights module that is stored in the memory unit and executed locally by the processing engine. The licensing rights module is operable to present licensing options for selected media content, generate proposed licensing rights based on selected licensing options and communicate the proposed licensing rights. Additionally, the system includes a network device in communication with the wireless device that comprises a computer platform that includes a processing engine, a memory unit and a license validation module stored in the memory unit and executed by the processing engine. The license validation module is operable to validate proposed licensing rights received from the wireless communication device and communicate a licensing rights validation to the wireless communication device.

According to an alternate aspect, a method for validating licensing rights within a wireless network is defined. The method includes receiving, at a network device, communication from a wireless device that includes proposed licensing rights associated with media content, validating, at the network device, the proposed licensing rights and communicating, to the wireless device, a licensing rights validation thereby defining authenticated licensing rights.

Another aspect is defined by a machine-readable medium that includes instructions, which, when executed by a machine, cause the machine to perform operations. The operations include receiving, at a network device, communication from a wireless device that includes proposed licensing rights associated with media content, validating, at the network device, the proposed licensing rights and communicating, to the wireless device, a licensing rights validation thereby defining authenticated licensing rights.

In a related aspect, a processor device, operable be a network device and configured to perform the operations of receiving communication from a wireless device that includes proposed licensing rights associated with media content, validating the proposed licensing rights and communicating, to the wireless device, a licensing rights validation thereby defining authenticated licensing rights.

In another aspect, a network device for validating licensing rights is defined. The device includes a computer platform that includes a processing engine and a memory unit and a license validation module stored in the memory unit and executed by the processing engine. The license validation module is operable to validate proposed licensing rights received from the wireless communication device and communicate a licensing rights validation to the wireless communication device.

Thus, the described aspects provide for alternative methods for generating digitally authenticated media content licenses in a wireless network environment. The disclosed aspects provide for systems that bifurcate license formation by generating the licensing rights at the wireless device and generating the associated authentication mechanism at a network device. As such, the proposed aspects provide for content media licenses that are highly secured and are not readily susceptible to alteration or attack.

### BRIEF DESCRIPTION OF THE DRAWINGS

The disclosed aspects will hereinafter be described in conjunction with the appended drawings, provided to illustrate and not to limit the disclosed aspects, wherein like designations denote the elements, an in which:
Fig. 1 illustrates one aspect of a system for creating digitally authenticated licenses in a wireless Digital Rights Management (DRM) network;
Fig. 2 illustrates one aspect of a wireless device for creating digitally authenticated licenses;
Fig. 3 illustrates one aspect of the content storage in a wireless device for creating digitally authenticated licenses;
Fig. 4 illustrates one aspect of a licensing options table as presented on a wireless device for choosing licensing options;
Fig. 5 illustrates one aspect of a network device for creating digitally authenticated licenses;
Fig. 6 illustrates one aspect of a second network device for communicating usage term handles to the wireless device;
Fig. 7 illustrates one aspect of a cellular telephone network for implementing the DRM network;
Fig. 8 is a flowchart of one aspect of a method for creating digitally authenticated licenses at a wireless device;
Fig. 9 is a flowchart of one aspect of a method for authenticating licensing rights at a network device.

### DETAILED DESCRIPTION

The present devices, apparatus, methods, computer-readable media and processors now will be described more fully hereinafter with reference to the accompanying drawings, in which aspects of the described embodiments are shown. The devices, apparatus, methods, computer-readable media and processors may, however, be embodied in many different forms and should not be construed as limited to the aspects set forth herein; rather, these aspects are provided so that this disclosure will be thorough and complete, and will fully convey the scope of the invention to those skilled in the art. Additionally, throughout this description, like numbers refer to like elements.

The present devices, apparatus, methods, computer-readable media and processors provide for the creation of digitally authenticated, media content licenses in a wireless Digital Rights Management (DRM) network. The described aspects provide for the licensing rights to be generated at the wireless device in accordance with selected usage rules and, in some aspects, wireless device attributes. In response to receiving proposed licensing rights having approvable terms, the described aspects provide validation of the proposed licensing rights to the wireless device. For example, an authentication mechanism may be generated at a network device and communicated to the wireless device, either as on its own or as part of an assembled media content license. In some aspects, the wireless device assembles the licensing rights and the authentication mechanism to create the media content license, thereby allowing access by the wireless device to the content based on licensing terms generated at the wireless device.

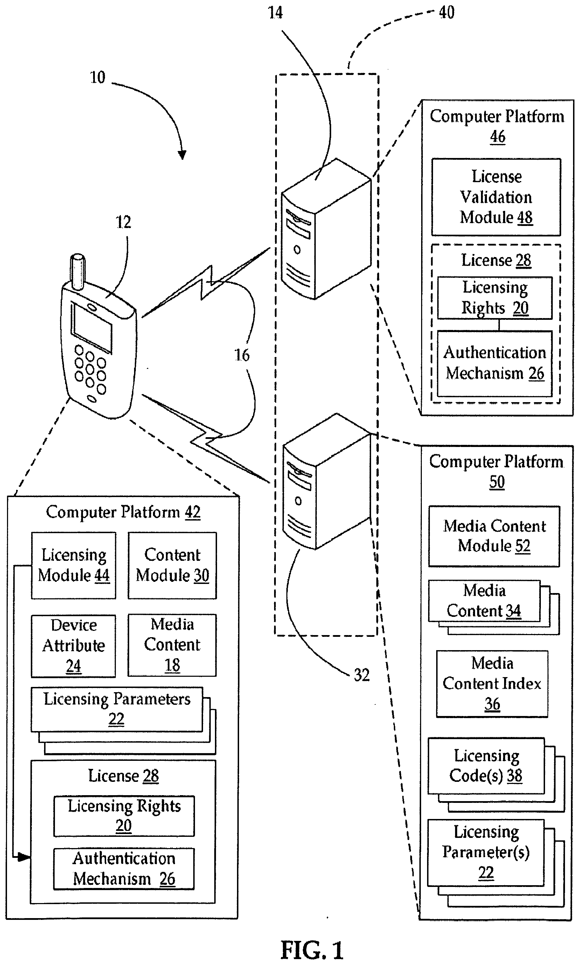

Referring to Fig. 1, one aspect is defined by a system **10** for creating digitally signed licenses on a wireless device in a wireless DRM network. The system **10** includes a wireless communication device **12** and a network device **14,** such as the illustrated licensing server, in communication across a wireless network **16.** For a protected piece of media content **18** to which the wireless device **12** desires access, the wireless device **12** locally generates licensing rights **20,** including usage terms and/or pricing, selected from a plurality of licensing parameters **22.** The available ones of the plurality of licensing parameters **22** may vary based on the requested media content **18,** and in some aspects, may further vary depending on a wireless device attribute **24,** as will be discussed below in more detail. Once the licensing rights **20** for the requested content **18** have been generated, the licensing rights, or a reference that corresponds to the generated licensing rights, are communicated from the wireless device **12** to the network device **14.** The network device **14** validates the terms associated with the licensing rights **20,** or the reference thereto, and generates a corresponding authentication mechanism **26,** such as a digital signature, digital certificate, digital code, keyed hash or the like. Once the authentication mechanism **26** has been created with respect to the licensing rights **20** proposed by the wireless device **12,** the network device **14** communicates the authentication mechanism **26** to the wireless device **12** and the wireless device **12** assembles and stores the licensing rights **20** and the authentication mechanism **26** as a digitally authenticated media content license **28.** Optionally, the network device **14** may assemble the licensing rights **20** and the authentication mechanism **26** into a digitally authenticated media content license **28** and communicate the license to the wireless device. Thus, once in possession of a valid media content license **28,** wireless device **12** may execute media content module **30** to access and present the respective licensed content **18.**

The system **10** may optionally include a second network device **32,** such as the illustrated media content server, which communicates with the wireless device **12** across wireless network **16** and provides the wireless device **12** with requested media content **18,** which may be selected from a plurality of media content **34** resident on or accessible by the second network device **32.** Additionally, in some aspects, the second network device **32** may provide for communicating to the wireless device **12** a media content index **36,** which may include a reference, referred to herein as a licensing code **38,** to usage terms and pricing information associated with the media content **34.** As will be discussed in more detail below, the wireless device **12** uses the one or more licensing codes **38** associated with a given media content **18** to filter the available usage terms, pricing and other licensing-related conditions from the plurality of potential licensing parameters **22,** thereby allowing a user of the wireless device **12** to select and generate licensing rights **20** to present to network device **14** for approval.

In some aspects, the licensing functionality of the network device **14** and the media content downloading functionality of second network device **32** may be embodied within a single, unitary network device (illustrated in Fig. 1 by block **40**). It should also be noted that the aspects described herein are not limited by the existence of media content **18** on the wireless device. The communication of the media content **18** to the wireless device **12** may occur at any point in time before, during or after the creation of the digitally authenticated media content license. As such, the media content **18** may be downloaded or otherwise communicated to the wireless device **12** prior to the generation of licensing rights **20,** at any point in time during the creation of the digitally authenticated license **28** or after the formation of the digitally authenticated license **28.**

The wireless communication device **12** includes a computer platform **42** that can transmit data across wireless network **16,** and that can receive and execute routines and applications. The computer platform **42** includes a licensing module **44** that generates licensing rights **20** for specified media content **18** based on selected licensing parameters **22** and, in some aspects, wireless device attributes **24.** Initially, the licensing module **44** will determine, at the wireless device, terms that will be used to generate the licensing rights. In some aspects, the user of a media content module **30,** which may operate in cooperation with licensing module **44,** selects the terms. For example, media content module **30** may allow for the user to select from amongst various usage options, such as unlimited use, time period usage (e.g., one day, one month, etc.), play count based usage (e.g., one play, five plays, etc.) or the like.

In some aspects, the various usage term options and the corresponding prices of the options, which are presented by the media content module **30,** may be based on device attributes **24** associated with the wireless device. The attributes **24** may include, but are not limited to, service or membership status (e.g., premier/gold service, standard service, member of a club associated with a content provider, etc.), geographic/physical location and/or network location associated with the wireless device or the device user, device security capabilities, hardware capabilities and the like. In this manner, the licensing parameters **22** which are available to the user of the wireless device **12** may differ amongst wireless devices based on the unique attributes associated with each respective wireless device.

Once the particular licensing parameters **22** for the selected media content **18** are selected, the licensing module **44** generates licensing rights **20.** The licensing rights **20** may be directly defined by the selected one of the plurality of licensing parameters **22,** or alternatively, the licensing rights **20** may further include other parameters, such as device-specific, network-specific, and/or content-specific parameters. In some aspects, the licensing module **44** may read the one or more licensing codes **38** associated with the requested content **18,** and then rely on a look-up table that maps the one or more licensing codes **38** to available usage terms, pricing information and/or licensing conditions in the database of licensing parameters **22.**

Once the proposed licensing rights **20** are generated, they are communicated to the network device **14** via wireless network **16.** The network device **14** includes a computer platform **46** that can transmit data across wireless network **16,** and that executes routines and applications. The computer platform **46** includes a license validation module **48** that confirms that the licensing rights **20** proposed by the wireless device **12** fall within the scope of available licensing rights for the given content and/or for the given wireless device. For example, license validation module **48** may compare the proposed licensing rights **20** with the authentic version of available licensing parameters **22** and the licensing codes **38** associated with the given content **18,** such as by confirming this information with network device **32** and/or with a local copy of this information. If the terms of the licensing rights **20** are confirmed, then license validation module **48** is operable to cause the generation of an authentication mechanism **26,** such as a digital signature or the like to validate the licensing rights **20.** The term "authentication mechanism", as used herein, may refer to any digital code typically employed in the art of network communications. For example, authentication mechanisms **26** may include an acceptable encryption algorithm, a cipher, a keyed hash, and/or a Message Authentication Code (MAC). Once the authentication mechanism **26** has been associated with the licensing rights **20,** the network device communicates the authentication mechanism **26** to the wireless device or, alternatively, the network device communicates a media content license **28** (i.e., the combined licensing rights and authentication mechanism) to the wireless device.

Once the wireless device **12** receives the authentication mechanism **26** from the network device **14,** the licensing module **44** assembles the licensing rights **20** and the authentication mechanism **26** to define a content media license **28.**

The optional second network device **32** includes a computer platform **50** that can transmit data across wireless network **16,** and that can execute routines and applications. The computer platform **50** includes a media content module **52** operable to interact with content module **30** resident on the wireless device **12.** In some aspects, media content module **52** may forward media content module **30** to the wireless device **12** to enable the wireless device to retrieve content from the network device. Further, media content module **52** may forward the media content index **36** and the plurality of licensing parameters **22** to the wireless device **12.** The media content index **36** may identify the content **34** available from the network device **32.** The plurality of licensing parameters **22** may identify various usage terms, pricing and conditions that may be available for one or more of the plurality of content **34** provided by the network device **32.** Further, in response to a request for more information on a specific piece of content, media content module **52** may forward the requested content **18,** which may be selected from the plurality of content **34,** as well as one or more corresponding licensing codes **38** which identify available ones of the plurality of licensing parameters **22** for the requested content. For example, once the licensing codes **38** have been communicated to the wireless device, the licensing module **44** uses the codes in combination with the licensing parameters to generate licensing right options for the user of the wireless device.

Thus, system **10** provides apparatus and methods for creating a license **20** to selected content **18** at the wireless device **12.**

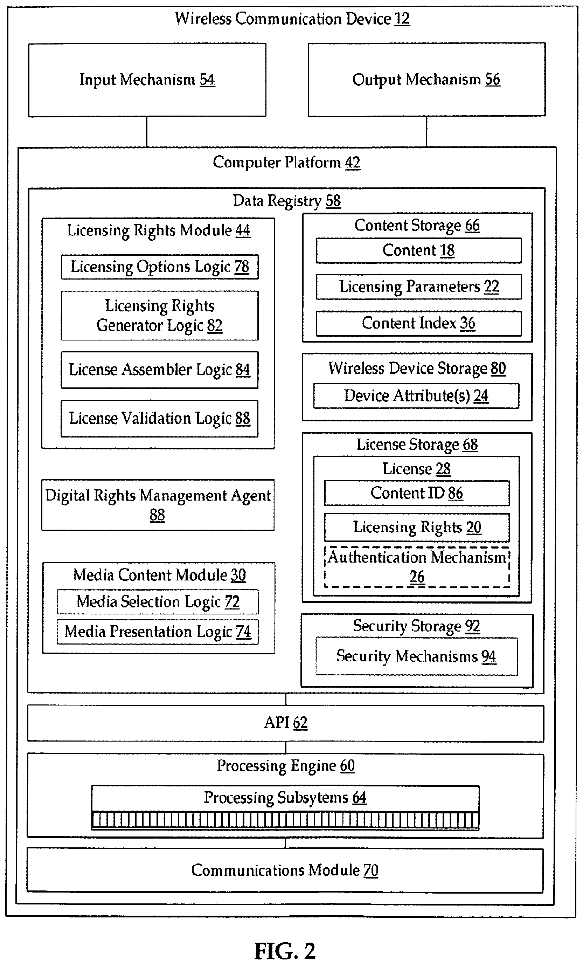

Referring to Fig. 2, according to one aspect, a wireless communication device is depicted. The wireless device **12** may include any type of computerized, wireless device, such as cellular telephone, Personal Digital Assistant (PDA), two-way text pager, portable computer, and even a separate computer platform that has a wireless communications portal, and which also may have a wired connection to a network or the Internet. The wireless device **12** can be a remote-slave, or other device that does not have an end-user thereof but simply communicates data across the wireless network **16,** such as remote sensors, diagnostic tools, data relays, and the like. The apparatus and method for creating digitally signed licenses can accordingly be performed on any form of wireless device or computer module, including a wired or wireless communication portal, including without limitation, wireless modems, PCMCIA cards, access terminals, personal computers, telephones, or any combination or sub-combination thereof.

Additionally, wireless device **12** has input mechanism **54** for generating inputs into wireless device, and output mechanism **56** for generating information for consumption by the user of the wireless device. For example, input mechanism **54** may include a mechanism such as a keypad or keyboard, a mouse, a touch-screen display, a microphone in association with a voice recognition module, etc. In certain aspects, the input mechanisms **54** provides for user input to activate the media content module **30,** choose a desired piece of content **18** from the media content index **36** and subsequently choose from amongst a wireless-device generated list of usage and pricing options. Further, for example, output mechanism **56** may include a display, an audio speaker, a haptic feedback mechanism, etc. In certain aspects, the output mechanisms assist in providing a user access to the media content index, the usage and pricing options and the media content.

Further, wireless device **12** has computer platform **42** that can transmit data across wireless network **16,** and that can receive and execute routines and applications and display data transmitted from network devices **14** and **32,** such as a licensing server or a media content server or another computer device connected to wireless network **16.** Computer platform **42** includes a data registry **58,** which may comprise volatile and nonvolatile memory such as read-only and/or random-access memory (RAM and ROM), EPROM, EEPROM, flash cards, or any memory common to computer platforms. Further, data registry **58** may include one or more flash memory cells, or may be any secondary or tertiary storage device, such as magnetic media, optical media, tape, or soft or hard disk.

Further, computer platform **42** also includes a processing engine **60,** which may be an application-specific integrated circuit ("ASIC"), or other chipset, processor, logic circuit, or other data processing device. Processing engine **60** or other processor such as ASIC may execute an application programming interface ("API") layer **62** that interfaces with any resident programs, such as licensing module **44,** in a data registry **58** of the wireless device **12.** API **62** is typically a runtime environment executing on the respective wireless device. One such runtime environment is Binary Runtime Environment for Wireless® (BREW®) software developed by Qualcomm, Inc., of San Diego, California. Other runtime environments may be utilized that, for example, operate to control the execution of applications on wireless computing devices.

Processing engine **60** includes various processing subsystems **64** embodied in hardware, firmware, software, and combinations thereof, that enable the functionality of wireless device **12** and the operability of the wireless device on wireless network **16.** For example, processing subsystems **64** allow for initiating and maintaining communications, and exchanging data, with other networked devices. In one aspect, such as in a cellular telephone, communications processing engine **60** may include one or a combination of processing subsystems **64,** such as: sound, non-volatile memory, file system, transmit, receive, searcher, layer 1, layer 2, layer 3, main control, remote procedure, handset, power management, diagnostic, digital signal processor, vocoder, messaging, call manager, Bluetooth® system, Bluetooth® LPOS, position determination, position engine, user interface, sleep, data services, security, authentication, USIM/SIM, voice services, graphics, USB, multimedia such as MPEG, GPRS, etc. For the disclosed aspects, processing subsystems **64** of processing engine **60** may include any subsystem components that interact with applications executing on computer platform **42.** For example, processing subsystems **64** may include any subsystem components that receive data reads and data writes from API **62** on behalf of the licensing module **44.** Further, locally stored media content **18** and media content licenses **28** that are gathered and then logged in the content storage **66** and license storage **68,** respectively, are available from these subsystems **64.**

Computer platform **42** may further include a communications module **70** embodied in hardware, firmware, software, and combinations thereof, that enables communications among the various components of the wireless device **12,** as well as between the wireless device **12** and the wireless network **16.** The communication module **70** may include the requisite hardware, firmware, software and/or combinations thereof for establishing a wireless communication connection, including wireless signal transmit, receive, modulation and demodulation components.

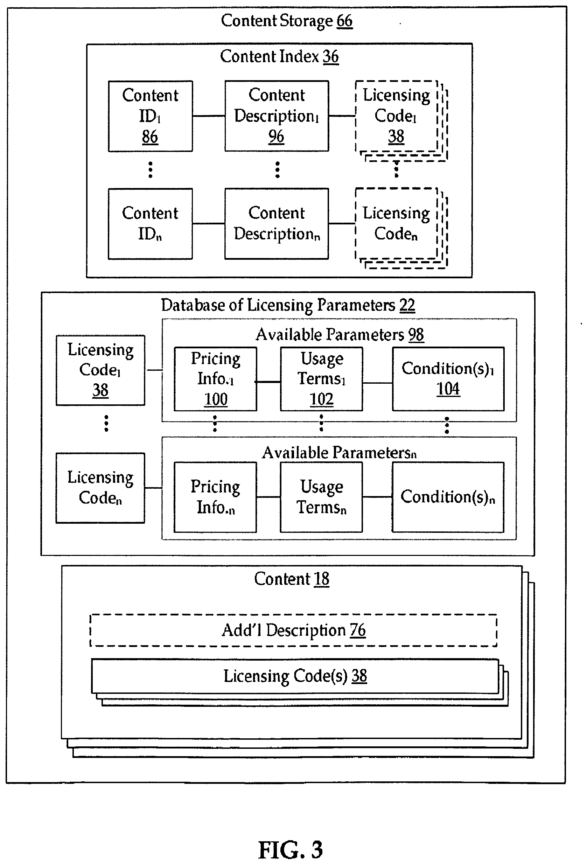

The computer platform **42** may further include a media content module **30** that is launched by the user of the wireless device who wishes to access media content. The media content module **30** includes hardware, software, firmware, executable instructions, data, and combinations thereof which provide the wireless device **12** with the ability to retrieve content descriptions, select parameters to include in proposed licensing rights, obtain a license, retrieve content from across the wireless network **16,** and access the retrieved content within the terms of the respective license. In some aspects, media content module **30** includes media selection logic **72,** which initiates wireless communication with a media content server in order to determine content available to download. For example, media selection logic **72** may retrieve a media content index **36** from a network device **32,** such as a media content server. Alternatively, media selection logic **72** may access a previously-retrieved and/or previously-stored version of the media content index **36** locally residing in content storage **66.** Media presentation logic **74** is operable to present the device user with the information from the media content index **36,** and is operable to receive selections for requested content **18.** For example, these selections may include requests for additional information, and/or requests to acquire the selected content. Further, media selection logic **72** may be operable to forward the request to the network device **32** in order to receive additional description **76** (Fig. 3) relating to the requested content, and/or to receive the requested content **18.** As noted above, the time of receipt of requested content **18** may be before, during or after the appropriate license **28** has been obtained. Further, upon receiving a selection and request to acquire media content, media selection logic **72** may be further operable to invoke licensing rights module **44** in order to initiate the acquisition of the appropriate license **28** for the requested content **18.**

Licensing rights module **44,** which may reside on computer platform **42,** is operable to generate proposed licensing rights locally at the wireless device, and communicate the proposed licensing rights to a network device. In response, upon approval of the licensing rights by the network device, licensing rights module **44** receives from the network device **14** either an authentication mechanism **26** associated with the licensing rights **20** or a digitally authenticated media content license **28.** Optionally, in some aspects, the licensing rights module **44** assembles the licensing rights **20** and the authentication mechanism **26** into the digitally signed media content license **28.** Licensing rights module **44** includes one or any combination of hardware, software, firmware, data and executable instructions to carry out the functionality described herein.

In some aspects, the licensing rights module **44** may include licensing options logic **78** operable for defining licensing terms associated with user-selected media content. In operation, according to some aspects, a user selects media content from the media content index **36,** the selection is sent to a network device **32,** such as a media content server, and the selected content **18,** additional description **76,** and/or content licensing codes **38** are communicated back to the wireless device. The licensing options logic **78** may be configured to access the content storage **66,** and specifically the database of the plurality of licensing parameters **22** (Fig. 3), to determine one or more sets of available licensing parameters **98,** including price, usage terms and conditions. In some aspects, licensing options logic **78** may access wireless device storage **80** to obtain wireless device attributes **24,** such as a wireless device identifier (ID) that uniquely identifies the wireless device or the wireless device user, a service status, a current device location, device security capabilities and device hardware capabilities, any combination thereof which may affect the availability of a given set of the plurality of licensing parameters **22.** Once the licensing options logic **78** determines the one or more sets of available licensing parameters **98,** the parameters representing one or more licensing options are presented to the user for selection.

The licensing rights module **44** also may include licensing rights generator logic **82** operable for generating licensing rights **20** at the wireless device. In some aspects, the licensing rights **20** are defined by the selected ones of the available licensing parameters **98.** Once the licensing rights generator logic **82** generates the licensing rights **20,** the rights are communicated from the wireless device **12** to a network device **14,** such as a licensing server.

The licensing rights module **44** may further include license assembler logic **84.** The license assembler logic **84** is invoked if the network device **14** communicates an authentication mechanism **26,** as opposed to a digitally signed media content license **28.** In the case of such an event, the license assembler logic **84** assembles a media content license **28** including, for example, the licensing rights **20,** the corresponding authentication mechanism **26,** and the corresponding content identification **86,** such as content metadata. Once the license assembler logic **84** has assembled the media content license **28,** the license **28** may be stored in license storage **68.**

The licensing rights module **44** may further include license validation logic **88** that is implemented in aspects in which the license **28** requires validation prior to accessing the media content **18** associated with the respective license **28.** In such aspects, the license validation logic **88** is operable to invoke the digital rights management ("DRM") agent **90** to access the media content license **28** prior to accessing the related media content **18.** The DRM agent **90** interacts with both licensing rights module **44** and media player module **30** to verify the existence of proper licensing rights, such as license **28** in license storage **68,** prior to executing media content **18.** DRM agent **90** may be embodied in at least one of hardware, software, firmware, data and executable instructions, and generally controls the consumption of any content **18** based on the associated licensing rights **20.**

In some aspects, validation of the media content license **28** provides for validating the authentication mechanism **26,** which in some aspects includes accessing security storage **92** to retrieve and implement the appropriate one of a plurality of security mechanisms **94,** such as a key corresponding to the key used to create the digital signature, a keyed hash function, etc.

Further, in certain aspects, the network device **14** and/or **32** will communicate all or portions of the license **28,** the authentication mechanism **26,** and/or the content **18,** to the wireless device **12** in a secure manner, such as by encrypting and authenticating the data. This authentication is above and beyond the "built-in" authentication that comes from digitally signing or applying a keyed-hash message authentication code (HMAC) to the license itself. It protects the entire communications channel, so that associated metadata, etc. cannot be tampered with or viewed. In such cases, the wireless device **12** may utilize one of a plurality of security mechanisms **94,** such as a corresponding key or the like, which may be stored in the security storage **92,** to decrypt and authenticate the secured message and thereby allow access to or modification of the information. In other aspects, another one of the plurality of security mechanisms **94** may include a locking mechanism, such as a key or the like, for encrypting or otherwise encoding the proposed licensing rights **20,** or any other information, prior to communication to the network device **14** or prior to internally storing information.

In any case, once the license **28** has been validated, the licensing rights module **44** causes enforcement the rights granted by the license and provides the user with access to the media content **18** according to the terms of the license.

Referring additionally to Fig. 3, the content storage **66** of wireless device **12** may store media content index **36** that provides the user with one or a plurality of content identifications (IDs) **86,** such as a name and/or unique identifier, and corresponding descriptions **96** of the content available from network device **32.** Additionally, content index **36** may further include one or more licensing code(s) **38** associated with each content ID **86.** Each licensing code **38** relates to a predetermined set of available parameters **98** within the plurality of licensing parameters **22** for the given content ID **86.** For example, in some aspects, the predetermined available licensing parameters **98** may include one or more of: pricing information **100,** which identifies a cost associated with the given set of licensing terms, such as a monetary amount or a discount or mark-up from a standard cost; usage terms **102,** which identify usage rules for the content, such as a predetermined number of times the content may be accessed, a predetermined time period for which the content may be accessed, unlimited access, etc.; and one or more conditions **104,** which may identify a prerequisite for qualifying for the given pricing information **100** and/or usage terms **102,** such as a device attribute **24,** a network attribute, a device user attribute, and any other quality that may affect pricing and usage. Examples of conditions **104** include, but are not limited to: a predetermined status, such as a membership status, an association with an entity/enterprise, a carrier relationship, a content provider relationship, a content distributor relationship, etc.; a predetermined device hardware characteristic, such as an amount of memory, a processor speed, a display size and configuration, a sound speaker type and capability, etc.; a predetermined device software characteristic, such as a version of an application, program or operating system; a predetermined device user characteristic, such as a user identification; and, a predetermined network-related characteristic, such as an associated carrier network or network component, etc. Further, the content storage **66** includes one or more selected content **18.** Each selected content **18** may further include additional content description **76,** which may provide a more detailed explanation of the respective content. Further, each selected content **18** may further include references to one or more licensing codes **38** corresponding to available licensing parameters **98** for the respective content.

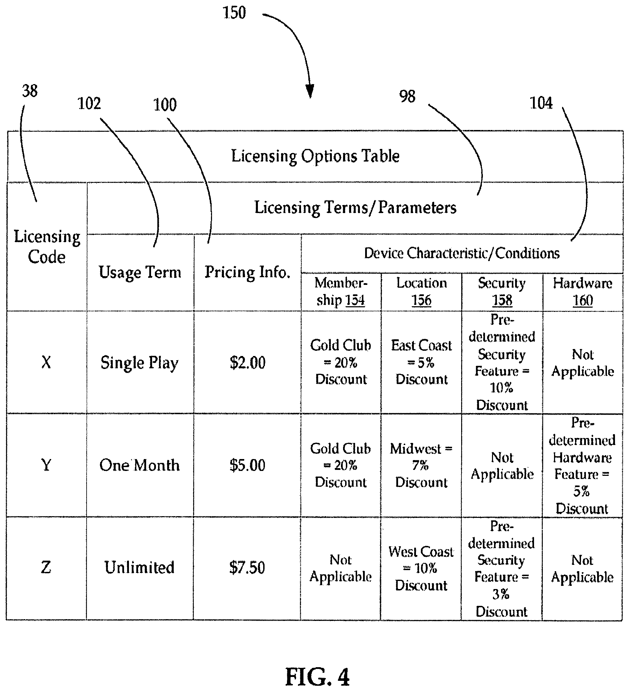

Referring to Fig. 4, in some aspects, a licensing options table **150** may be presented on the output mechanism **56** of the wireless device **10** upon indicating a desire to obtain rights to desired content, such as by making a selection from content index **36.** Such a table **150** interactively provides the user of the wireless device **12** with the ability to select from among a plurality of available licensing terms/parameters **98** associated with the selected content **18** (Fig. 3) or content ID **86** (Fig. 3), and to thereby selectively generate proposed licensing rights **20** (Fig. 2). As noted above, each of the plurality of media content **34** (Fig. 1) is associated with one or more licensing codes **38.** Further, each licensing code **38** is indexed in a list of licensing parameters **22.** As such, upon selected of a given piece of content 18, the media content module **30** references the list of licensing parameters **22** and extracts the one or more available licensing parameter terms **98** corresponding to each licensing code **38** associated with the selected content **18.** Thus, in this manner, media content module **30** generates the licensing options table **150** and initiates presentation of the table to the user of the wireless device **12.** In the illustrated example, licensing terms **98** include usage terms **102,** pricing information **100** and device characteristics/conditions **104.** It is noted that the illustrated table shows only an example of licensing terms; alternate aspects may include other licensing terms. In the illustrated table, for example, the user is presented with three different licensing codes, "X", "Y" and "Z", which allow the user to choose from three different usage and pricing options. For example, licensing code "X" is associated with a single play usage option at a price of $2.00, licensing code "Y" is associated with a monthly usage option at a price of $5.00 and licensing code "Z" is associated with an unlimited usage option at a price of $7.50.

In some aspects, the device characteristics/conditions **104** define characteristics or conditions that affect the availability of the given licensing terms and/or that provide for a predetermined adjustment to the given pricing information and/or the given usage terms. For example, in the illustrated table **150,** the device characteristics/conditions **104** include the membership status **154** of the user, the location **156** of the device or the user, the security capabilities **158** of the device and the hardware **160** capabilities of the device. Thus, in the illustrated aspect, a 20% pricing discount will be afforded the user if a membership exists, a 5% pricing discount will be afforded the user if the device is located in a predefined location, a 10% pricing discount will be afforded the user if the device is equipped with requisite security capabilities and a 5% pricing discount will be afforded the user if the device is equipped with requisite hardware capabilities. Although illustrated as affecting pricing information **100,** it should be re-emphasized that the device characteristics/conditions **104** may affect the pricing information **100,** the usage terms **102,** any combination thereof, and even the ability to qualify for the licensing option. Additionally, in some aspects, for example, the media content module **30** may automatically highlight or otherwise indicate the ability to qualify for a given one of the device characteristics/conditions **104** based on comparing the device attributes **24** (Fig. 2) with the device characteristics/conditions **104.**

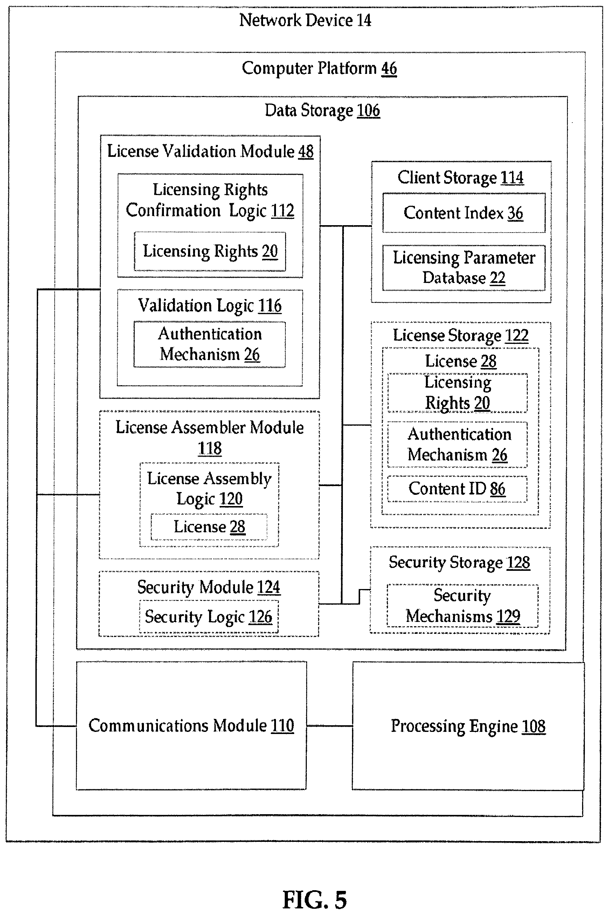

Referring to Fig. 5, in one aspect, illustrates a network device **14,** such as a licensing server is presented. The network device may comprise at least one of any type of hardware, server, personal computer, mini computer, mainframe computer, or any computing device either special purpose or general computing device. Further, the modules and applications described herein as being operated on or executed by the network device **14** may be executed entirely on the network device **14** or alternatively, in other aspects, separate servers or computer devices may work in concert to provide data in usable formats to parties, and/or to provide a separate layer of control in the data flow between the wireless device **12** and the modules and applications executed by network device **14.**

The network device **14** has computer platform **46** that can transmit and receive data across wireless network **16,** and that can execute routines and applications. Computer platform **46** includes a data storage **106,** which may comprise volatile and nonvolatile memory such as read-only and/or random-access memory (RAM and ROM), EPROM, EEPROM, flash cards, or any memory common to computer platforms. Further, data storage **106** may include one or more flash memory cells, or may be any secondary or tertiary storage device, such as magnetic media, optical media, tape, or soft or hard disk. Further, computer platform **46** also includes a processing engine **108,** which may be an application-specific integrated circuit ("ASIC"), or other chipset, processor, logic circuit, or other data processing device. The computer platform **46** may further include a communications module **110** embodied in hardware, firmware, software, and combinations thereof, that enables communications among the various components of the network device **14,** as well as between the network device **14** and the wireless network **16.** For example, in the described aspects, the communication module **110** is configured to receive proposed licensing rights **20** from wireless device **12** and, if agreeable, communicate in response an authentication mechanism **26** and/or an authenticated license **28** that provides access to the respective content **18** (Fig. 1). As noted above, authentication mechanism **26** may include a digital signature or any other mechanism operable to authenticate licensing approval-related information from the network device **14.**

The data storage **106** includes a license validation module **48** that is in communication with the processing engine **108** and operable for validating the proposed licensing rights **20** and generating an authentication mechanism, such as a digital signature, digital certificate, keyed hash or the like, in response to validation of the licensing rights **20.**

The license validation module **48** includes rights confirmation logic **112** that confirms that the licensing rights **20** proposed by the wireless device **12** falls within the scope of available licensing parameters **98** for the given content **18** and/or for the given wireless device **12.** For example, the rights confirmation logic **112** may compare the proposed licensing rights **20** with the authentic version of available licensing parameters **98** and the licensing codes **38** associated with the given content **18** and/or content ID **86** (Fig. 3), such as by confirming this information with network device **32** and/or with a local copy of this information stored in client storage **114.**

The license validation module **48** further includes validation logic **116,** which is implemented if the terms of the licensing rights **20** are approved/confirmed. The validation logic **116** is operable to cause the generation of an authentication mechanism **26,** such as a digital signature, digital certificate or the like, to validate the licensing rights **20.** Further, for example, authentication mechanism **26** may further include an acceptable encryption algorithm, a cipher, a keyed hash, a message authentication code (MAC), etc.

In some aspects, the communications module **110** of the network device **14** will communicate the generated authentication mechanism **26** to the wireless device **12,** while in alternate embodiments the network device will assemble a license **28** including the authentication mechanism **26** and communicate the assembled license to the wireless device **10.** Thus, in those aspects in which the license **28** is assembled at the network device **14,** the data storage **106** includes a license assembler module **118** that implements license assembly logic **120** operable for assembling a media content license **28.** The license assembler logic **120** assembles a media content license **28** including the licensing rights **20,** authentication mechanism **26,** and content identification **86,** such as content metadata or the like. In some aspects, the network device **14** may include license storage **122** that provides for storage of the license **28.** Additionally, the license **28** and/or authentication mechanism **26** may be generated and/or stored with reference to the respective selected content **18** and/or content ID **86,** as well as with reference to the identification information associated with the respective wireless device **12.**

In some aspects, the network device **14** may assign and communicate one of a plurality of security mechanisms **129** along with the authentication mechanism **26.** In this case, the data storage **106** may include a security module **124** having security logic **126** operable for generating and/or assigning one of the security mechanisms **129,** which may be stored in security storage **128.** The security mechanisms **129** may include encryption and/or decryption mechanisms, such as one of a public/private key pair, a symmetric key or any other mechanism that provides for the secure exchange of the authentication mechanism **26** and/or license **28** between the network device **14** and wireless device **12.**

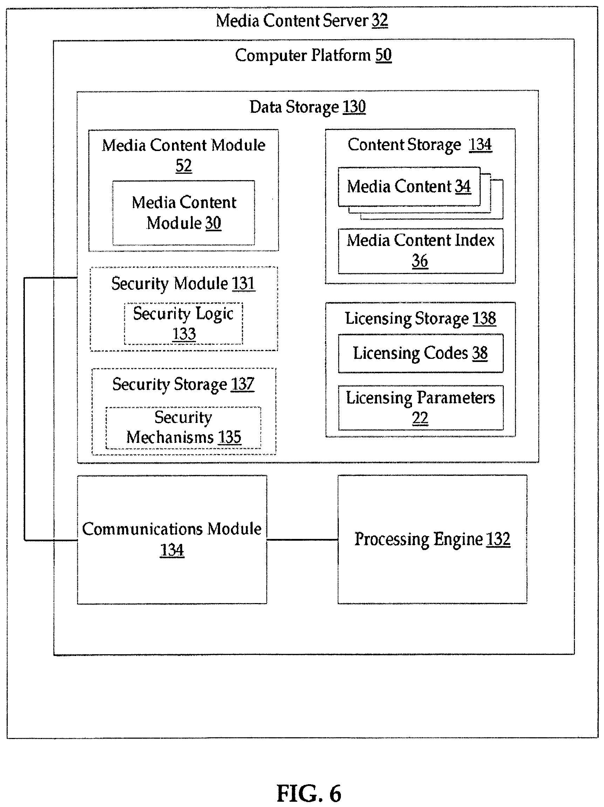

Referring to Fig. 6, some aspects of the described embodiments include a second network device **32,** such as a media content server or the like. As previously discussed, the functionality of the media content server **32** and the licensing server **14** may be incorporated in one comprehensive network device/component or in individual network devices/components. The second network device **32** may comprise at least one of any type of hardware, server, personal computer, mini computer, mainframe computer, or any computing device either special purpose or general computing device. Further, the modules and applications described herein as being operated on or executed by the second network device **32** may be executed entirely on the second network device **32** or alternatively, in other aspects, separate servers or computer devices may work in concert to provide data in usable formats to parties, and/or to provide a separate layer of control in the data flow between the wireless device **12** and the modules and applications executed by second network device **32.**

The second network device **32** has computer platform **50** that can transmit and receive data across wireless network **16,** and that can execute routines and applications. Computer platform **50** includes a data storage **130,** which may comprise volatile and nonvolatile memory such as read-only and/or random-access memory (RAM and ROM), EPROM, EEPROM, flash cards, or any memory common to computer platforms. Further, data storage **130** may include one or more flash memory cells, or may be any secondary or tertiary storage device, such as magnetic media, optical media, tape, or soft or hard disk. Further, computer platform **50** also includes a processing engine **132,** which may be an application-specific integrated circuit ("ASIC"), or other chipset, processor, logic circuit, or other data processing device. The computer platform **50** may further include a communications module **134** embodied in hardware, firmware, software, and combinations thereof, that enables communications among the various components of the second network device **32,** as well as between the second network device **32** and the wireless network **16.** For example, in the described aspects, the communication module **134** is configured to receive messages representing requests for available media content, additional content information, and selected media content, and to transmit the content index **36,** the licensing parameter database **22,** and any selected content **18** from the plurality of available media content **34.**

The data storage **130** includes media content module **52** that is operable to interact with the media content module **30** resident on the wireless device **12.** In some aspects, media content module **52** may forward media content module **30** to the wireless device **12** to enable the wireless device to retrieve content from the network device **32.** Further, media content module **52** may be operable to access content storage **130** and retrieve the media content index **36** and forward the index to the wireless device **12.** The media content index **36** may identify the content available from the network device **32.** Additionally, the media content module **52** may be operable to access the licensing storage **138,** retrieve the database of licensing parameters **22,** and forward the database of licensing parameters **22** to the wireless device **12.** As previously noted, the database of licensing parameters **22** may identify a plurality of licensing terms and conditions, predetermined combinations of which are available for one or more of the plurality of content **34** provided by the network device **32.** Further, in response to a request from the wireless device **12** for more information on a specific piece of content, media content module **52** may access content storage **134** to retrieve and forward additional description **76** (Fig. 3) associated with the requested content **18** (Fig. 3), which may be selected from the plurality of content **34.** Further, media content module **52** is operable to transmit to the wireless device **12** the desired content 18 (Fig. 3) selected from the plurality of content **34,** which as noted previously may occur at any time during the interaction between the wireless device **12** and one and/or both of servers **32** and **14.**

Thus, the content index **36** and database of licensing parameters **22** may be utilized by network device **32** to provide an efficient system of identifying available content and corresponding available licensing options. The data held by both the index **36** and the licensing parameter database **22** may be dynamically updated to include references to new content and/or new licensing parameters, or to delete inactive content and/or parameters. Therefore, the content index **36** and database of licensing parameters **22** provide a dynamic mechanism for establishing a plurality of licensing options for a plurality of content.

Additionally, in some aspects, data storage **130** may further include a security module **131** having security logic **133** operable to apply one of a plurality of security mechanisms **135** to any information transmitted and/or received by media content server 32. For example, data storage **130** may include a security storage **137** for storing the plurality of security mechanism **135.** The security mechanisms **135** may include, for example, one or any combination of mechanisms for encrypting and/or decrypting information, such as a public/private key, a symmetric key, etc. For example, all or any portion of one or more of the plurality of media content **34** may be encrypted by one of the security mechanisms **135,** in this case a locking mechanism, to protect against unauthorized usage. For example, referring to Fig. 3, the selected content **18** may be transmitted to the wireless device **12** in a state wherein the additional description **76** is in the clear, but the remaining portion of the selected content **18** is encrypted. As such, the wireless device **12** may be prevented from accessing the entirety of the selected content **18** until appropriate licensing rights, such a license **28** (Fig. 1) are obtained, and in some cases, until appropriate fees have been paid. Network device **14** may notify network device **32** when it is appropriate to send a given wireless device **12** the access mechanism, i.e. one of the plurality of security mechanism **135,** corresponding to the locking mechanism used to secure the selected content **18.** In other alternatives, network device **32** may provide the access mechanism to network device **14,** which may then forward it to the wireless device **12** along with the authentication mechanism **26** and/or the license **28.**

Referring back to Fig. 1, the wireless network 16 may include at least one, or any combination, of: a cellular telephone network; a terrestrial telephone network; a satellite telephone network; an infrared network such as an Infrared Data Association ("IrDA")-based network; a short-range wireless network; a Bluetooth® technology network; a ZigBee® protocol network; an ultra wide band ("UWB") protocol network; a home radio frequency ("HomeRF") network; a shared wireless access protocol ("SWAP") network; a wideband network, such as a wireless Ethernet compatibility alliance ("WECA") network, a wireless fidelity alliance ("Wi-Fi Alliance") network, and a 802.11 network; a public switched telephone network; a public heterogeneous communications network, such as the Internet; a private communications network; and land mobile radio network. Suitable examples of telephone networks include at least one, or any combination, of analog and digital networks/technologies, such as: code division multiple access ("CDMA"), wideband code division multiple access ("WCDMA"), universal mobile telecommunications system ("UMTS"), advanced mobile phone service ("AMPS"), time division multiple access ("TDMA"), frequency division multiple access ("FDMA"), orthogonal frequency division multiple access ("OFDMA"), global system for mobile communications ("GSM"), single carrier ("IX") radio transmission technology ("RTT"), evolution data only ("EV-DO") technology, general packet radio service ("GPRS"), enhanced data GSM environment ("EDGE"), high speed downlink data packet access ("HSPDA"), analog and digital satellite systems, and any other technologies/protocols that may be used in at least one of a wireless communications network and a data communications network.

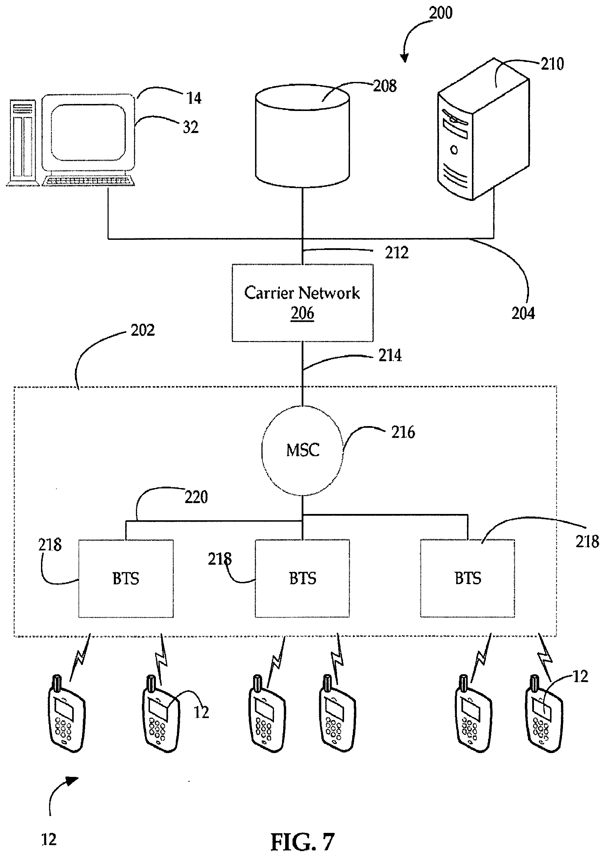

Referring to Fig. 7, in one aspect, each of the plurality of wireless devices 12 comprises a cellular telephone. A cellular telephone system 200 may include wireless network 202 connected to a wired network 204 via a carrier network 206. Wireless devices 12 are being manufactured with increased computing capabilities and often can communicate packets including voice and data over wireless network 202. As described earlier, these "smart" wireless devices 12 have APIs resident on their local computer platform 42 that allow software developers to create software applications that operate on the cellular telephone **12,** and control certain functionality on the device. Fig. 7 is a representative diagram that more fully illustrates the components of a cellular wireless network and the interrelation of the elements of one aspect of the present system. Cellular wireless network **202** is merely exemplary and can include any system whereby remote modules, such as wireless devices **12** communicate over-the-air between and among each other and/or between and among components of a wireless network **202,** including, without limitation, wireless network carriers and/or servers.

In system **200,** licensing server **14** and/or media content server **32** can be in communication over a wired network **204** (e.g. a local area network, LAN) with a separate data repository **208** for storing modules and/or data associated with the described embodiments, such as the licensing rights module, the licenses, the content or wireless device data. Further, a data management server **210** may be in communication with licensing server **14** and/or media content server **32** to provide post-processing capabilities, data flow control, etc. Licensing server **14** and/or media content server **32,** data repository **208** and data management server **210** may be present on the cellular telephone system **200** with any other network components that are needed to provide cellular telecommunication services. Licensing server **14** and/or media content server **32,** and/or data management server **208** communicate with carrier network **206** through a data links **212** and **214,** which may be data links such as the Internet, a secure LAN, WAN, or other network. Carrier network **206** controls messages (generally being data packets) sent to a mobile switching center ("MSC") **216.** Further, carrier network **206** communicates with MSC **216** by a network **214,** such as the Internet, and/or POTS ("plain old telephone service"). Typically, in network **214,** a network or Internet portion transfers data, and the POTS portion transfers voice information. MSC **216** may be connected to multiple base stations ("BTS") **218** by another network **220,** such as a data network and/or Internet portion for data transfer and a POTS portion for voice information. BTS **218** ultimately broadcasts messages wirelessly to the wireless devices, such as wireless devices **10,** by short messaging service ("SMS"), or other over-the-air methods.

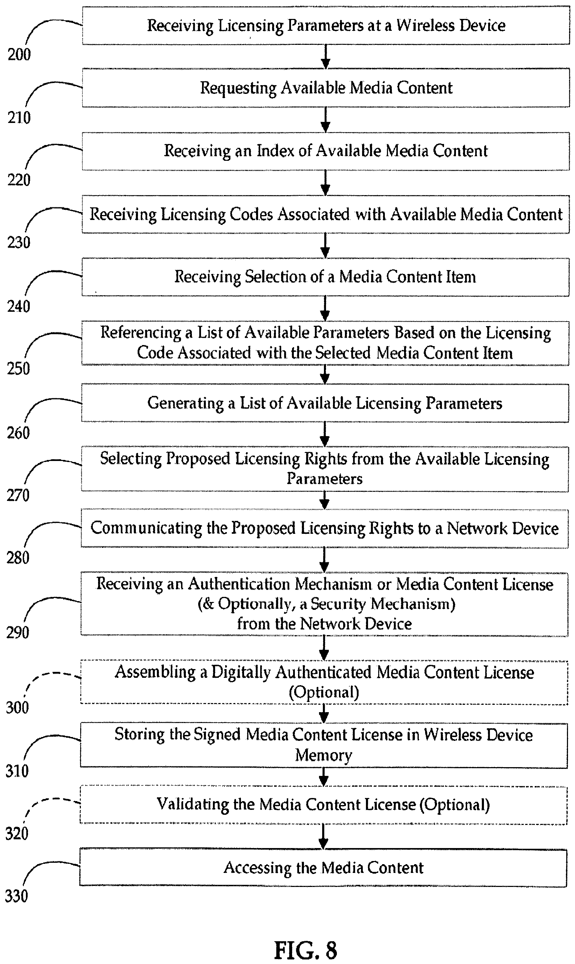

In accordance with an aspect, Fig. 8 provides a flow diagram of a method for generating licensing rights at a wireless device. At Event **200,** license parameters are received or otherwise loaded onto a wireless device. In this regard, the licensing parameters may be communicated from a network device, such as a licensing server, a media content server or the like. Alternatively, the licensing parameters may be preloaded on the wireless device by the device manufacturer or service provider or the licensing parameters loaded on to the wireless device by any other acceptable means. In the illustrated method the licensing parameters are received or otherwise loaded prior to requesting access to media content, however; the licensing parameters may received or otherwise loaded onto the wireless device at any point in time during the process of generating the media content license or accessing the media content.

Licensing parameters may include but are not limited to pricing information, which identifies a cost associated with the given set of licensing terms, such as a monetary amount or a discount or mark-up from a standard cost; usage terms, which identify usage rules for the content, such as a predetermined number of times the content may be accessed, a predetermined time period for which the content may be accessed, unlimited access, etc and conditions, which may identify a prerequisite for qualifying for the given pricing information and/or usage terms. Conditions may include a device attribute, a network attribute, a device user attribute, and any other quality that may affect pricing and usage. Examples of conditions include, but are not limited to: a predetermined status, such as a membership status, an association with an entity/enterprise, a carrier relationship, a content provider relationship, a content distributor relationship, etc.; a predetermined device hardware characteristic, such as an amount of memory, a processor speed, a display size and configuration, a sound speaker type and capability, etc.; a predetermined device software characteristic, such as a version of an application, program or operating system; a predetermined device user characteristic, such as a user identification; and, a predetermined network-related characteristic, such as an associated carrier network or network component, etc.

At Event **210,** a request is generated for available media content. In many aspects, the request for available media content will include launching a media player module or application, which in turn communicates with an external network, such as the Internet, to retrieve a listing of available media content. At Event **220,** in response to the request for available media content, the wireless device will receive an index of available media content communicated from a network device, such as a media content server. In certain aspects, the content index will include the title or name of the media content, a brief description of the content and, optionally, an unprotected preview portion of the media content (i.e., an audio, video or multimedia preview of the media content). The media content index is provided to the user through an appropriate output mechanism, such as a display.

At Event **230,** the wireless device receives licensing codes associated with the available media content. The licensing codes may be communicated as part of the index of available content (Event **220**) or the licensing codes may be communicated in conjunction with a request for additional information related to an available media content item, or upon selection of a media content item or at any other appropriate point in time during the generation of the media content license or the accessing of media content. The licensing code is indexed in the listing of licensing parameters and provides for the media content item to be associated with one or more licensing parameters.

At Event **240,** the wireless device receives a user selection of desired media content. In the aspect described above, the selection may occur by a user indicating a choice of a desired media content item, such as an audio file, video file, multimedia file, text file or the like, from a media content index listing of available media content items. Selection of an option to use or purchase rights to the selected media content item triggers, at Event **250,** the referencing of a list of available parameters based on the licensing code associated with the selected media content item. At Event **260,** a selection list of available licensing parameters is generated and displayed on a wireless device output mechanism, such as a display. At Event **270,** if the user desires a license to use the media content, the wireless device receives a user selection from one or a plurality of the available licensing parameters to form proposed licensing rights.

At Event **280,** the proposed licensing rights and a content identifier, such as appropriate content metadata, are communicated to a network device, such as a licensing server. At Event **290,** in response to the communication of the proposed licensing rights to the network device, the wireless device receives an authentication mechanism or, alternately, a media content license that includes the licensing rights, the authentication mechanism and a content identifier. The authentication mechanism may include a digital signature, a digital certificate, a keyed hash value or the like. Additionally, the wireless device may receive a security mechanism such as a decryption key, which is used to access the selected content. At optional Event **300,** the wireless device assembles the media content license, including the licensing rights, the authentication mechanism, the content identifier and, optionally, the security mechanism. The assembling of the media content license at the wireless device is only required if the network device communicates the authentication mechanism absent an assembled media content license.

At Event **310,** the wireless device stores the digitally authenticated media content license in wireless device memory. When a user desires access to the media content, at optional Event **320,** the media content license is validated based on the authentication mechanism. Once validated, the licensing rights are enforced, secured content may be unsecured, and, at Event **330,** the user is granted access to the media content according to the rights in the media content license.

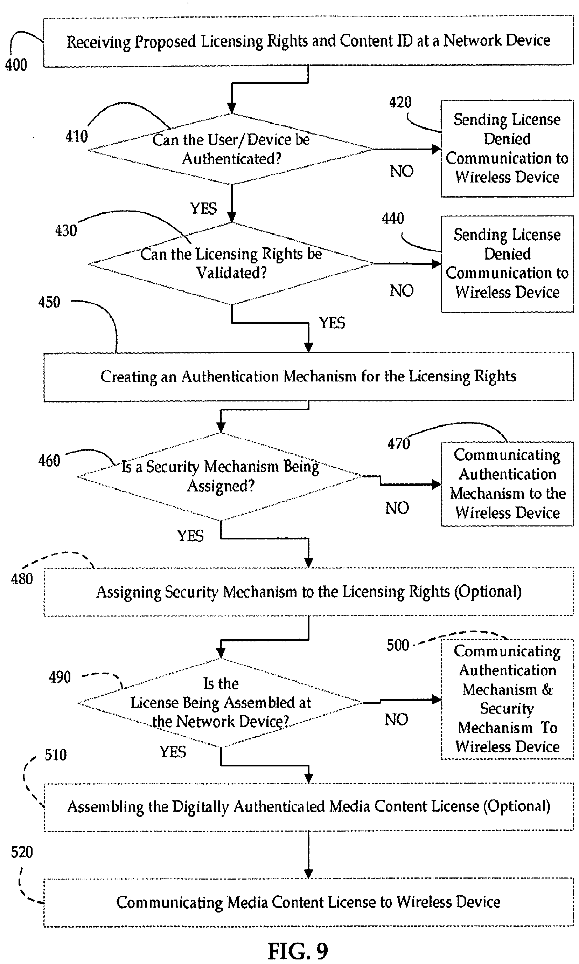

In accordance with another aspect, Fig. 9 provides a flow diagram of a method for validating licensing rights and generating an authentication mechanism at a network device. At Event **400,** a network device, such as a licensing server receives proposed licensing rights and a content identifier from a wireless device. At Decision **410,** the network device determines if the wireless device or, alternately the user of the wireless device, can be authenticated. If the wireless device cannot be authenticated, at Event **420,** the network device communicates a license denied message to the wireless device. If the wireless device and/or user can be authenticated then, at Decision **430,** the network device determines if the licensing rights can be validated as acceptable licensing rights for the selected content. Validation occurs by matching up the proposed licensing rights with confirmed, allowable licensing rights. The network device may store or otherwise have access to the confirmed, allowable licensing rights, such as via an authentic listing of licensing parameters and/or licensing codes. If a determination is made that the licensing rights cannot be authenticated then, at Event **440,** the network device communicates a license denied message to the wireless device. If the licensing rights can be validated then, at Event **450,** the network device creates an authentication mechanism, such as a digital signature, digital certificate, keyed hash value or the like with respect to the licensing rights. For example, in one aspect, the network device executes a standard RSA algorithm over a hash of the license that then serves as the digital signature.

Once the authentication mechanism has been generated, at Decision **460,** the network device may optionally determine if a security mechanism has been or is to be assigned to the content and/or the authentication mechanism and/or license. If no security mechanism is warranted, then at Event **470,** the network device communicates the authentication mechanism to the wireless device that sent the proposed licensing rights. If a determination is made that a security mechanism is to be assigned, then at Event **480,** a security mechanism is assigned to the content and/or authentication mechanism and/or license. At Decision **490,** the network device determines if a media content license is to be assembled at the network device. If a determination is made that the network device does not assemble the media content license then, at Event **500,** the network device communicates the authentication mechanism and the security mechanism to the wireless device.

If a determination is made that the network device assembles a license, then at optional Event **510,** the media content license is assembled including the licensing rights, the authentication mechanism, a content identifier and, optionally, a security mechanism. At Event **520,** the assembled media content license is communicated to the wireless device.

Thus, the described aspects provide apparatus and methods for generating media content licenses in a wireless network environment. The disclosed aspects provide for systems that bifurcates license formation by generating the licensing rights at the wireless device and generating the associated authentication mechanism at a network device. As such, the proposed aspects provide for content media licenses that are highly secured and are not readily susceptible to alteration or attack.

The various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

Further, the steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium is coupled to the processor, such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

Therefore, upon having the benefit of the teachings presented in the foregoing descriptions and the associated drawings, many modifications and other embodiments of the invention will come to mind to one skilled in the art to which this invention pertains. Therefore, it is to be understood that the invention is not to be limited to the specific aspects disclosed and that modifications are intended to be included within the scope of the appended claims.

## Claims

1. A method for accessing a selected media content (18), comprising:
communicating across a wireless network (16) the selected media content (18) to a wireless device (12);
presenting licensing options for the selected media content (18)
generating, at the wireless device (12), one or more proposed licensing rights (20) related to the selected media content (18) and based on selected licensing options;
communicating across a wireless network (16) the proposed licensing rights (20) to a network device (14) for validation;
receiving, at the wireless device (12) from a network device across the wireless network (16), licensing rights validation comprising an authentication mechanism (26), thereby defining authenticated licensing rights;
associating, at the wireless device (12), the authentication mechanism (26) with the licensing rights (20);
assembling, at the wireless device (12), the authentication mechanism (20), the licensing rights (20) and a content identifier to form the media content license (28);
validating, at the wireless device (12), the media content license (28) based on the authentication mechanism; and
granting, at the wireless device (12), access to the selected media content according to the rights in the media content license (28);
accessing, at the wireless device (12), the selected media content (18) according to the rights in the media content license (28).

2. The method of claim 1, wherein generating, at a wireless device (12), one or more proposed licensing rights (20) related to selected media content further comprises:
generating a list of one or more available licensing parameters (22) associated with the selected media content (18) which further defines the one or more licensing parameters as chosen from the group consisting of a usage term, a price and a wireless device condition; and
selecting one or more available licensing parameters (22) to define the one or more proposed licensing rights (20);
wherein the wireless device condition is further defined as chosen from the group consisting of service status, device location, security capability and hardware capability; and
wherein generating a list of available licensing parameters (22) associated with the selected media content (20) further comprises referencing a licensing code (38) associated with the selected media content (20) to define available licensing parameters;
wherein referencing a licensing code (38) associated with the selected media content (20) to define available licensing parameters comprises receiving the licensing code in response to one of:
an inquiry for available media content, and
an inquiry for information related to a selected media content item.

3. The method of claim 1, wherein:
the media content license further comprises a security mechanism.

4. A wireless communication device, the device comprising:
means for being communicated a selected media content (18) across a wireless network (16);
means for processing data on the wireless device (12);
means for storing data on the wireless device (12) that is in communication with the means for processing data;
means for presenting licensing options for the selected media content (18);
means for generating one or more proposed licensing rights (20) related to the selected media content and based on selected licensing options;
means for communicating the proposed licensing rights (20) to a network device (14) across a wireless network for validation; and further comprising:
means for receiving, from a network device across the wireless network, a licensing right validation, comprising an authentication mechanism (26), thereby defining authenticated. licensing rights;
means for an associating the authentication mechanism (26) with the licensing rights (20);
means for assembling the licensing rights (20), the authentication mechanism (26) and a content identifier to form a media content license (28);
means for validating the media content license (28) based on the authentication mechanism; and
means for granting access to the selected media content according to the rights in the media content license (28);
means for accessing the selected media content according to the rights in the media content license (28).

5. A wireless communication device as claimed in claim 4, wherein:
said means for processing data comprises a computer platform (42) including a processing engine (60) and said means for storing data comprises a memory unit; and
said means for presenting licensing options for selected media content (18), for generating proposed licensing rights (20) based on selected licensing options, for communicating the proposed licensing rights to a network device for validation, and said means for receiving a licensing right approval comprising an authentication mechanism (26), for associating the authentication mechanism (26) with the licensing rights (20), and for assembling the licensing rights (20), the authentication mechanism (26) and a content identifier to define a media content license (28) comprises a licensing rights module (44) stored in the memory unit and executed by the processing engine.

6. The wireless communication device of claim 5, wherein the licensing rights module (44) that is operable to present licensing options for selected media content (18) is further operable to generate a list of one or more available licensing parameters (22) associated with the selected media content (18) which further defines the one or more licensing parameters (22) as chosen from the group consisting of a usage term, a price and a wireless device condition, and provide for the selection of one or more available licensing parameters (22) to define the one or more proposed licensing rights (20);
wherein the wireless device condition is further defined as chosen from the group consisting of service status, device location, security capability and hardware capability;
wherein the licensing rights module (44) that is operable to generate a list of one or more available licensing parameters (22) associated with the selected media content (18) is further operable to reference a licensing code (38) associated with the selected media content (18) to define available licensing parameters (22);
wherein the licensing rights module (44) that is operable to reference a licensing code (38) associated with the selected media content (18) to define available licensing parameters (22) is further operable to receive the licensing code (38) in response to one of:
an inquiry for available media content, and
an inquiry for information related to a selected media content item.

7. The wireless communication device of claim 5, wherein the media content license (28) further comprises a security mechanism.

8. A machine-readable medium comprising instructions, which, when executed by a machine, cause the machine to perform operations to perform a method as claimed in any one of claims 1 to 3.

## Patentansprüche

1. Ein Verfahren zum Zugreifen auf einen ausgewählten Medieninhalt (18), das Folgendes aufweist:
Kommunizieren, über ein Drahtlosnetzwerk (16) hinweg, des ausgewählten Medieninhalts (18) an eine Drahtloseinrichtung (12);
Darstellen von Lizensierungsoptionen für den ausgewählten Medieninhalt (18),
Generieren, an der Drahtloseinrichtung (12), eines oder mehrerer vorgeschlagener Lizensierungsrechte (20), die mit dem ausgewählten Medieninhalt (18) in Beziehung stehen und basierend auf ausgewählten Lizensierungsoptionen;
Kommunizieren, über ein Drahtlosnetzwerk (16) hinweg, der vorgeschlagenen Lizensierungsrechte (20) an eine Netzwerkeinrichtung (14) zur Validierung;
Empfangen, an der Drahtloseinrichtung (12) von einer Netzwerkeinrichtung über das Drahtlosnetzwerk (16) hinweg, einer Validierung von Lizensierungsrechten, was einen Authentifizierungsmechanismus (26) aufweist, wodurch authentifizierte Lizensierungsrechte definiert werden;
Assoziieren, an der Drahtloseinrichtung (12), des Authentifizierungsmechanismus (26) mit den Lizensierungsrechten (20);
Zusammenfügen, an der Drahtloseinrichtung (12), des Authentifizierungsmechanismus (20), der Lizensierungsrechte (20) und eines Inhaltsidentifikators zum Bilden der Medieninhaltslizenz (28);
Validieren, an der Drahtloseinrichtung (12), der Medieninhaltslizenz (28) basierend auf dem Authentifizierungsmechanismus; und
Erteilen, an der Drahtloseinrichtung (12), von Zugriff auf den ausgewählten Medieninhalt gemäß den Rechten in der Medieninhaltslizenz (28);
Zugreifen, an der Drahtloseinrichtung (12), auf den ausgewählten Medieninhalt (18) gemäß den Rechten in der Medieninhaltslizenz (28).

2. Verfahren nach Anspruch 1, wobei das Generieren, an einer Drahtloseinrichtung (12), von einem oder mehreren vorgeschlagenen Lizensierungsrechten (20), die mit dem ausgewählten Medieninhalt in Beziehung stehen, weiter Folgendes aufweist:
Generieren einer Liste von einem oder mehreren verfügbaren Lizensierungsparametern (22), die mit dem ausgewählten Medieninhalt (18) assoziiert sind, welche weiter den einen oder die mehreren Lizensierungsparameter definieren, wie sie aus der Gruppe ausgewählt sind, die aus Folgendem besteht: einer Nutzungsbedingung, einem Preis und einem Drahtloseinrichtungszustand; und
Auswählen eines oder mehrerer verfügbarer Lizensierungsparameter (22) zum Definieren der ein oder mehreren vorgeschlagenen Lizensierungsrechte (20);
wobei der Drahtloseinrichtungszustand weiter definiert ist als aus der Gruppe ausgewählt, die aus Folgendem besteht: Dienststatus, Einrichtungsstandort, Sicherheitsfähigkeit und Hardware-Fähigkeit; und
wobei das Generieren einer Liste von verfügbaren Lizensierungsparametern (22), die mit dem ausgewählten Medieninhalt (20) assoziiert sind, weiter Bezugnehmen auf einen Lizensierungscode (38) aufweist, der mit dem ausgewählten Medieninhalt (20) assoziiert ist zum Definieren verfügbarer Lizensierungsparameter;
wobei das Bezugnehmen auf einen Lizensierungscode (38), der mit dem ausgewählten Medienhalt (20) assoziiert ist zum Definieren von verfügbaren Lizensierungsparametern Empfangen des Lizensierungscodes ansprechend auf eines von Folgendem aufweist:
eine Anfrage hinsichtlich verfügbarem Medieninhalt, und
eine Anfrage hinsichtlich Information, die mit einem ausgewählten Medieninhaltselement in Beziehung steht.

3. Verfahren nach Anspruch 1, wobei:
die Medieninhaltslizenz weiter einen Sicherheitsmechanismus aufweist.

4. Eine Drahtloskommunikationseinrichtung, wobei die Einrichtung Folgendes aufweist:
Mittel, denen ein ausgewählter Medieninhalt (18) über ein Drahtlosnetzwerk (16) hinweg kommuniziert wird;
Mittel zum Verarbeiten von Daten auf der Drahtloseinrichtung (12);
Mittel zum Speichern von Daten auf der Drahtloseinrichtung (12), die sich in Kommunikation befinden mit dem Mitteln zum Verarbeiten von Daten;
Mittel zum Darstellen von Lizensierungsoptionen für den ausgewählten Medieninhalt (18);
Mittel zum Generieren eines oder mehrerer vorgeschlagener Lizensierungsrechte (20), die mit dem ausgewählten Medieninhalt in Beziehung stehen und basierend auf ausgewählten Lizensierungsoptionen;
Mittel zum Kommunizieren der vorgeschlagenen Lizensierungsrechte (20) an eine Netzwerkeinrichtung (14) über ein Drahtlosnetzwerk hinweg zur Validierung; und das weiter Folgendes aufweist:
Mittel zum Empfangen, von einer Netzwerkeinrichtung über das Drahtlosnetzwerk hinweg, einer Lizensierungsrechtevalidierung, die einen Authentifizierungsmechanismus (26) aufweisen, wodurch authentifizierte Lizensierungsrechte definiert werden;
Mittel zum Assoziieren des Authentifizierungsmechanismus (26) mit den Lizensierungsrechten (20);
Mittel zum Zusammenfügen der Lizensierungsrechte (20), des Authentifizierungsmechanismus (26) und eines Inhaltsidentifikators zum Bilden einer Medieninhaltslizenz (28);
Mittel zum Validieren der Medieninhaltslizenz (28) basierend auf dem Authentifizierungsmechanismus; und
Mittel zum Erteilen von Zugriff auf den ausgewählten Medieninhalt gemäß den Rechten in der Medieninhaltszugriffslizenz (28);
Mittel zum Zugreifen auf den ausgewählten Medieninhalt gemäß den Rechten in der Medieninhaltslizenz (28).

5. Drahtloskommunikationseinrichtung nach Anspruch 4, wobei:
die Mittel zum Verarbeiten von Daten eine Computerplattform (42) aufweisen, die eine Verarbeitungs-Engine (60) beinhaltet und die Mittel zum Speichern von Daten eine Speichereinheit aufweisen; und
die Mittel zum Darstellen von Lizensierungsoptionen für ausgewählten Medieninhalt (18), zum Generieren von vorgeschlagenen Lizensierungsrechten (20) basierend auf ausgewählten Lizensierungsoptionen, zum Kommunizieren der vorgeschlagenen Lizensierungsrechte an eine Netzwerkeinrichtung zur Validierung und die Mittel zum Empfangen einer Lizensierungsrechtegenehmigung, die einen Authentifizierungsmechanismus (26) aufweisen, zum Assoziieren des Authentifizierungsmechanismus (26) mit den Lizensierungsrechten (20) und zum Zusammenfügen der Lizensierungsrechte (20), des Authentifizierungsmechanismus (26) und eines Inhaltsidentifikators zum Definieren einer Medieninhaltslizenz (28) ein Lizensierungsrechtemodul (44) aufweisen, das in der Speichereinheit gespeichert ist und durch die Verarbeitungs-Engine ausgeführt wird.

6. Drahtloskommunikationseinrichtung nach Anspruch 5, wobei das Lizensierungsrechtemodul (44), das betreibbar ist zum Darstellen von Lizensierungsoptionen für ausgewählten Medieninhalt (18), weiter betreibbar ist zum Generieren einer Liste von einem oder mehreren verfügbaren Lizensierungsparametern (22), die mit dem ausgewählten Medieninhalt (18) assoziiert sind, die weiter die ein oder mehreren Lizensierungsparameter (22) definiert, wie sie aus der Gruppe ausgewählt sind, die aus Folgendem besteht: einer Nutzungsbedingung, einem Preis und einem Drahtloseinrichtungszustand, und zum Vorsehen der Auswahl von einem oder mehreren verfügbaren Lizensierungsparametern (22) zum Definieren der ein oder mehreren vorgeschlagenen Lizensierungsrechte (20);
wobei der Drahtloseinrichtungszustand weiter definiert ist als ausgewählt aus der Gruppe, die aus Folgendem besteht: Dienststatus, Einrichtungsstandort, Sicherheitsfähigkeit und Hardware-Fähigkeit;
wobei das Lizensierungsrechtemodul (44), das betreibbar ist zum Generieren einer Liste von ein oder mehreren verfügbaren Lizensierungsparametern (22), die mit dem ausgewählten Medieninhalt (18) assoziiert sind, weiter betreibbar ist zum Bezugnehmen auf einen Lizensierungscode (38), der mit dem ausgewählten Medieninhalt (18) assoziiert ist zum Definieren verfügbarer Lizensierungsparameter (22);
wobei das Lizensierungsrechtemodul (44), das betreibbar ist zum Bezugnehmen auf einen Lizensierungscode (38), der mit dem ausgewählten Medieninhalt (18) assoziiert ist zum Definieren verfügbarer Lizensierungsparameter (22) weiter betreibbar ist zum Empfangen des Lizensierungscodes (38) ansprechend auf eines von Folgendem:
eine Anfrage hinsichtlich verfügbarem Medieninhalt, und
eine Anfrage hinsichtlich Information, die mit einem ausgewählten Medieninhaltselement in Beziehung steht.

7. Drahtloskommunikationseinrichtung nach Anspruch 5, wobei die Medieninhaltslizenz (28) weiter einen Sicherheitsmechanismus aufweist.

8. Ein maschinenlesbares Medium, das Instruktionen aufweist, die, wenn sie durch eine Maschine ausgeführt werden, die Maschine veranlassen zum Durchführen von Operationen bzw. Vorgängen zum Durchführen eines Verfahrens nach einem der Ansprüche 1 bis 3.

## Revendications

1. Un procédé d'accès à un contenu multimédia sélectionné (18), comprenant :
la communication par l'intermédiaire d'un réseau sans fil (16) du contenu multimédia sélectionné (18) à un dispositif sans fil (12),
la présentation d'options de concession de licence destinées au contenu multimédia sélectionné (18),
la génération, au niveau du dispositif sans fil (12), d'un ou de plusieurs droits de concession de licence proposés (20) relatifs au contenu multimédia sélectionné (18) et basés sur des options de concession de licence sélectionnées,
la communication par l'intermédiaire d'un réseau sans fil (16) des droits de concession de licence proposés (20) à un dispositif de réseau (14) à des fins de validation,
la réception, au niveau du dispositif sans fil (12) à partir d'un dispositif de réseau par l'intermédiaire du réseau sans fil (16), d'une validation de droits de concession de licence comprenant un mécanisme d'authentification (26), définissant ainsi des droits de concession de licence authentifiés,
l'association, au niveau du dispositif sans fil (12), du mécanisme d'authentification (26) aux droits de concession de licence (20),
l'assemblage, au niveau du dispositif sans fil (12), du mécanisme d'authentification (20), des droits de concession de licence (20) et d'un identifiant de contenu de façon à former la licence de contenu multimédia (28),
la validation, au niveau du dispositif sans fil (12), de la licence de contenu multimédia (28) selon le mécanisme d'authentification, et
l'octroi, au niveau du dispositif sans fil (12), d'un accès au contenu multimédia sélectionné en fonction des droits mentionnés dans la licence de contenu multimédia (28),
l'accès, au niveau du dispositif sans fil (12), au contenu multimédia sélectionné (18) en fonction des droits mentionnés dans la licence de contenu multimédia (28).

2. Le procédé selon la Revendication 1, où la génération, au niveau d'un dispositif sans fil (12), d'un ou de plusieurs droits de concession de licence proposés (20) se rapportant à un contenu multimédia sélectionné comprend en outre :
la génération d'une liste d'un ou de plusieurs paramètres de concession de licence disponibles (22) associés au contenu multimédia sélectionné (18) qui définit en outre les un ou plusieurs paramètres de concession de licence tels que choisis dans le groupe se composant d'une durée d'utilisation, d'un prix et d'une condition de dispositif sans fil, et
la sélection d'un ou de plusieurs paramètres de concession de licence disponibles (22) de façon à définir les un ou plusieurs droits de concession de licence proposés (20),
où la condition de dispositif sans fil est définie en outre telle que choisie dans le groupe se composant d'un état de service, d'un emplacement de dispositif, d'une capacité de sécurité et d'une capacité de matériel, et
où la génération d'une liste de paramètres de concession de licence disponibles (22) associés au contenu multimédia sélectionné (20) comprend en outre la référence à un code de concession de licence (38) associé au contenu multimédia sélectionné (20) de façon à définir des paramètres de concession de licence disponibles,
où la référence à un code de concession de licence (38) associé au contenu multimédia sélectionné (20) de façon à définir des paramètres de concession de licence disponibles comprend la réception du code de concession de licence en réponse à une requête parmi :
une requête relative à un contenu multimédia disponible, et
une requête relative à des informations se rapportant à un élément de contenu multimédia sélectionné.

3. Le procédé selon la Revendication 1, où :
la licence de contenu multimédia comprend en outre un mécanisme de sécurité.

4. Un dispositif de communication sans fil, le dispositif comprenant :
un moyen de communication d'un contenu multimédia sélectionné (18) par l'intermédiaire d'un réseau sans fil (16),
un moyen de traitement de données sur le dispositif sans fil (12),
un moyen de conservation en mémoire de données sur le dispositif sans fil (12) qui est en communication avec le moyen de traitement de données,
un moyen de présentation d'options de concession de licence destinées au contenu multimédia sélectionné (18),
un moyen de génération d'un ou de plusieurs droits de concession de licence proposés (20) se rapportant au contenu multimédia sélectionné et basés sur des options de concession de licence sélectionnées,
un moyen de communication des droits de concession de licence proposés (20) à un dispositif de réseau (14) par l'intermédiaire d'un réseau sans fil à des fins de validation, et comprenant en outre :
un moyen de réception, à partir d'un dispositif de réseau par l'intermédiaire du réseau sans fil, d'une validation de droit de concession de licence, comprenant un mécanisme d'authentification (26), définissant ainsi des droits de concession de licence authentifiés,
un moyen d'association du mécanisme d'authentification (26) aux droits de concession de licence (20),
un moyen d'assemblage des droits de concession de licence (20), du mécanisme d'authentification (26) et d'un identifiant de contenu de façon à définir une licence de contenu multimédia (28),
un moyen de validation de la licence de contenu multimédia (28) selon le mécanisme d'authentification, et
un moyen d'octroi d'un accès au contenu multimédia sélectionné en fonction des droits mentionnés dans la licence de contenu multimédia (28),
un moyen d'accès au contenu multimédia sélectionné en fonction des droits mentionnés dans la licence de contenu multimédia (28).

5. Un dispositif de communication sans fil selon la Revendication 4, où :
ledit moyen de traitement de données comprend une plateforme informatique (42) comprenant un moteur de traitement (60) et ledit moyen de conservation en mémoire de données comprend une unité à mémoire, et
ledit moyen de présentation d'options de concession de licence destinées à un contenu multimédia sélectionné (18), de génération de droits de concession de licence proposés (20) en fonction d'options de concession de licence sélectionnées, de communication des droits de concession de licence proposés à un dispositif de réseau à des fins de validation, et ledit moyen de réception d'une approbation de droit de concession de licence comprenant un mécanisme d'authentification (26), d'association du mécanisme d'authentification (26) aux droits de concession de licence (20) et d'assemblage des droits de concession de licence (20), du mécanisme d'authentification (26) et d'un identifiant de contenu de façon à définir une licence de contenu multimédia (28) comprend un module de droits de concession de licence (44) conservé en mémoire dans l'unité à mémoire et exécuté par le moteur de traitement.

6. Le dispositif de communication sans fil selon la Revendication 5, où le module de droits de concession de licence (44) qui est conçu de façon à présenter des options de concession de licence destinées à un contenu multimédia sélectionné (18) est conçu en outre de façon à générer une liste d'un ou de plusieurs paramètres de concession de licence disponibles (22) associés au contenu multimédia sélectionné (18) qui définit en outre les un ou plusieurs paramètres de concession de licence (22) tels que choisis dans le groupe se composant d'une durée d'utilisation, d'un prix et d'une condition de dispositif sans fil, et à fournir la sélection d'un ou de plusieurs paramètres de concession de licence disponibles (22) de façon à définir les un ou plusieurs droits de concession de licence proposés (20),
où la condition de dispositif sans fil est définie en outre tels que choisie dans le groupe se composant d'un état de service, d'un emplacement de dispositif, d'une capacité de sécurité et d'une capacité de matériel,
où le module de droits de concession de licence (44) qui est conçu de façon à générer une liste d'un ou de plusieurs paramètres de concession de licence disponibles (22) associés au contenu multimédia sélectionné (18) est conçu en outre de façon à faire référence à un code de concession de licence (38) associé au contenu multimédia sélectionné (18) de façon à définir des paramètres de concession de licence disponibles (22),
où le module de droits de concession de licence (44) qui est conçu de façon à faire référence à un code de concession de licence (38) associé au contenu multimédia sélectionné (18) de façon à définir des paramètres de concession de licence disponibles (22) est conçu en outre de façon à recevoir le code de concession de licence (38) en réponse à une requête parmi :
une requête relative à un contenu multimédia disponible, et
une requête relative à des informations se rapportant à un élément de contenu multimédia sélectionné.

7. Le dispositif de communication sans fil selon la Revendication 5, où la licence de contenu multimédia (28) comprend en outre un mécanisme de sécurité.

8. Un support lisible par ordinateur contenant des instructions, qui, lorsqu'elles sont exécutées par un ordinateur, amènent l'ordinateur à exécuter des opérations destinées à l'exécution d'un procédé selon fune quelconque des Revendications 1 à 3.
